# FASCICULE DE BREVET EUROPEEN

(11) **EP 3 883 833 B1**
(45) Date de publication et mention de la délivrance du brevet: **30.11.2022**
(21) Numéro de dépôt: 19813114.6
(22) Date de dépôt: 25.10.2019
(51) Int. Cl.: B60W 30/14, B60W 50/00

(54) **RÉGULATION DE LA VITESSE D'UN VÉHICULE EN VIRAGE EN FONCTION DE LA CONSIGNE DE VITESSE**
STEUERUNG DER GESCHWINDIGKEIT EINES FAHRZEUGS BEI KURVENFAHRT ENTSPRECHEND DEM GESCHWINDIGKEITSSOLLWERT
CONTROL OF THE SPEED OF A VEHICLE WHEN CORNERING IN ACCORDANCE WITH THE SPEED SETPOINT

(30) Priorité: 23.11.2018 FR 1871747
(43) Date de publication de la demande: 29.09.2021
(73) Titulaire: PSA Automobiles SA, 78300 Poissy (FR)
(72) Inventeur: BELLE, Claire, 25230 SELONCOURT (FR); PERROT, Fabrice, 91430 IGNY (FR)
(86) Numéro de dépôt international: PCT/FR2019/052548
(87) Numéro de publication internationale: WO 2020/104738

(56) Documents cités:
- EP-A1- 2 853 457
- DE-A1-102012 011 171
- DE-A1-102016 215 046
- US-A1- 2007 050 127
- US-A1- 2008 059 037
- US-A1- 2016 304 093
- US-A1- 2018 186 373

## Description

### Domaine technique de l'invention

L'invention concerne les véhicules à conduite au moins partiellement automatisée, et plus précisément la régulation de la vitesse de tels véhicules.

Dans ce qui suit on considère qu'un véhicule est à conduite au moins partiellement automatisée (ou autonome) lorsqu'il peut être conduit de façon automatisée (partielle ou totale (sans intervention de son conducteur)) pendant une phase de conduite automatisée, ou de façon manuelle (et donc avec intervention de son conducteur sur le volant et/ou les pédales) pendant une phase de conduite manuelle.

### Etat de la technique

Certains véhicules à conduite au moins partiellement automatisée (ou autonome) comprennent un dispositif de régulation chargé de réguler leur vitesse en fonction d'une consigne de vitesse, éventuellement choisie par leur conducteur. Certains de ces dispositifs de régulation comprennent une option permettant d'adapter la vitesse de leur véhicule en fonction du rayon de courbure de la future portion qu'il s'apprête à emprunter sur la voie de circulation sur laquelle il circule.

Ce type de dispositif de régulation comprend au moins un calculateur qui, en cas de détection d'un rayon de courbure de la future portion empruntée représentatif d'un virage, contrôle l'imposition à son véhicule d'une phase de décélération jusqu'à une vitesse de décélération (ou de passage en virage) choisie, puis d'une phase d'accélération jusqu'à obtention d'une vitesse qui est égale à la consigne de vitesse. L'accélération dans la phase d'accélération dépend du rayon de courbure de la portion de route située devant le véhicule. Elle peut donc être limitée ou non. Dans ce dernier cas, c'est le dispositif de régulation de vitesse du véhicule qui assure le contrôle pour rejoindre la vitesse de consigne. En d'autres termes, en cas de détection d'un prochain virage, on réduit temporairement la vitesse du véhicule afin de faciliter son passage dans ce virage et ainsi améliorer le confort des passagers.

On connait par le document DE 10 2016 215046 un procédé pour assister un conducteur dans un virage ou pour effectuer automatiquement un virage.

Actuellement, lorsque le conducteur du véhicule impose à ce dernier une accélération pendant la phase de décélération, par exemple du fait qu'il est en train de doubler un autre véhicule, le calculateur interrompt temporairement cette phase de décélération, et lorsque le conducteur du véhicule cesse d'imposer une accélération, le calculateur recommence à contrôler l'imposition de la phase de décélération interrompue, laquelle sera ensuite suivie de la phase d'accélération précitée. Un tel mode de fonctionnement ne prend pas en compte la volonté du conducteur, à savoir l'envie de ne pas voir la vitesse de son véhicule baisser jusqu'à la vitesse choisie de fin de phase de décélération, par exemple du fait qu'il veut poursuivre le dépassement en cours dans le virage. En outre, ce mode de fonctionnement peut induire un ralentissement du flux de circulation qui peut paraître incompréhensible à l'un au moins des conducteurs des véhicules qui suivent le véhicule ralenti, voire peut s'avérer dangereux lorsque l'un de ces derniers conducteurs ne s'aperçoit pas du ralentissement, en particulier lorsque le ralentissement est trop faible pour générer son signalement. De plus, si la vitesse du véhicule concerné est très légèrement supérieure à celle des véhicules circulant sur la voie de droite (dans le cas d'une conduite à gauche), le ralentissement du véhicule concerné peut rendre sa vitesse inférieure à celle des véhicules circulant sur la voie de droite. Il peut alors en résulter un dépassement du véhicule concerné par un véhicule circulant sur la voie de droite, ce qui est interdit par le code de la route.

Il a été proposé de choisir la vitesse de décélération (ou de passage en virage) d'une phase de décélération en cours en fonction de la consigne de vitesse en cours. Ainsi, le conducteur qui le désire peut réduire ou augmenter manuellement la consigne de vitesse afin d'induire une réduction ou une augmentation de la valeur de la vitesse de décélération. Cependant une telle option impose une intervention manuelle du conducteur sur l'organe de commande associé à la fonction de régulation de vitesse. En outre, cela impose que le conducteur sache si le virage est serré, très serré ou extrême, ce qui n'est pas toujours le cas. De plus, cette option contraint ensuite le conducteur à penser à remodifier après le passage du virage la consigne de vitesse qu'il vient de modifier, car cette dernière peut désormais induire un ralentissement du trafic ou être (notablement) au-dessus d'une limitation de vitesse qui est imposée sur la portion de voie de circulation qu'il emprunte.

L'invention a donc notamment pour but d'améliorer la situation.

### Présentation de l'invention

Elle propose notamment à cet effet un procédé, destiné à réguler la vitesse d'un véhicule à conduite au moins partiellement automatisée et connaissant le rayon de courbure d'une future portion qu'il s'apprête à emprunter sur une voie de circulation sur laquelle il circule, et comprenant une étape dans laquelle on régule la vitesse du véhicule en fonction d'une consigne de vitesse, et, en cas de détection d'un rayon de courbure de la future portion qui est représentatif d'un virage, on impose au véhicule une phase de décélération jusqu'à une vitesse de décélération (ou de passage en virage) choisie.

Ce procédé se caractérise par le fait que dans son étape :
- on détermine une accélération transversale maximale que peut subir le véhicule dans le virage en fonction de la consigne de vitesse, puis
- on détermine une vitesse maximale qu'aurait le véhicule dans ce virage s'il subissait cette accélération transversale maximale en présence du rayon de courbure détecté, puis
- on choisit une vitesse de décélération en fonction de cette vitesse maximale déterminée.

Ainsi, on peut désormais adapter automatiquement la vitesse de décélération (ou de passage) du véhicule dans un virage en fonction de la consigne de vitesse et du rayon de courbure de ce virage, afin d'anticiper la volonté très souvent constatée du conducteur d'avoir un écart entre sa consigne de vitesse et la vitesse de décélération d'autant plus petit (relativement) que la consigne de vitesse est élevée.

Le procédé selon l'invention peut comporter d'autres caractéristiques qui peuvent être prises séparément ou en combinaison, et notamment :
- dans son étape on peut déterminer l'accélération transversale maximale que peut subir le véhicule dans le virage en fonction de la consigne de vitesse et d'une réduction maximale de vitesse autorisée en fonction d'un contexte local en cours ;
- dans son étape on peut déterminer l'accélération transversale maximale que peut subir le véhicule dans le virage en fonction d'un intervalle de vitesses auquel appartient la consigne de vitesse et qui est choisi parmi au moins deux intervalles de vitesses choisis ;
   ➢ dans son étape les intervalles de vitesses peuvent être choisis en fonction du contexte local en cours ;
   ➢ dans son étape on peut choisir la vitesse de décélération en fonction de la vitesse maximale déterminée et de la réduction maximale de vitesse autorisée ;
   ➢ dans son étape la réduction maximale de vitesse autorisée peut être fonction d'un écart de vitesse entre une vitesse limite autorisée sur la voie de circulation empruntée par le véhicule et la consigne de vitesse ;
      » dans son étape, plus l'écart de vitesse est grand, plus la réduction maximale de vitesse autorisée peut être grande.

L'invention propose également un produit programme d'ordinateur comprenant un jeu d'instructions qui, lorsqu'il est exécuté par des moyens de traitement, est propre à mettre en œuvre un procédé de régulation de vitesse du type de celui présenté ci-avant pour réguler la vitesse d'un véhicule à conduite au moins partiellement automatisée et connaissant le rayon de courbure d'une future portion qu'il s'apprête à emprunter sur une voie de circulation sur laquelle il circule.

L'invention propose également un dispositif de régulation de vitesse, d'une part, destiné à équiper un véhicule à conduite au moins partiellement automatisée et connaissant le rayon de courbure d'une future portion qu'il s'apprête à emprunter sur une voie de circulation sur laquelle il circule, et, d'autre part, comprenant au moins un calculateur contrôlant la régulation de la vitesse du véhicule en fonction d'une consigne de vitesse, et, en cas de détection d'un rayon de courbure de la future portion qui est représentatif d'un virage, contrôlant l'imposition au véhicule d'une phase de décélération jusqu'à une vitesse de décélération (ou de passage en virage) choisie.

Ce dispositif de régulation de vitesse se caractérise par le fait que son calculateur détermine une accélération transversale maximale que peut subir le véhicule dans le virage en fonction de la consigne de vitesse, puis détermine une vitesse maximale qu'aurait le véhicule dans ce virage s'il subissait cette accélération transversale maximale en présence du rayon de courbure détecté, puis choisit une vitesse de décélération en fonction de cette vitesse maximale déterminée.

L'invention propose également un véhicule, éventuellement de type automobile, à conduite au moins partiellement automatisée, connaissant le rayon de courbure d'une future portion qu'il s'apprête à emprunter sur une voie de circulation sur laquelle il circule, et comprenant un dispositif de régulation de vitesse du type de celui présenté ci-avant.

### Brève description des figures

D'autres caractéristiques et avantages de l'invention apparaîtront à l'examen de la description détaillée ci-après, et des dessins annexés, sur lesquels :
[Fig. 1] illustre schématiquement et fonctionnellement un véhicule situé sur l'une des deux voies de circulation d'une route et équipé d'un capteur, de circuits d'analyse et d'un exemple de réalisation d'un dispositif de régulation de vitesse selon l'invention, et
[Fig. 2] illustre schématiquement au sein d'un diagramme des première (c1) et seconde (c2) courbes d'évolution de l'accélération transversale (at) autorisée en fonction de la vitesse (v) d'un véhicule faisant l'objet d'une régulation de vitesse avec décélération dans un virage, en présence de trafics respectivement faible et fort, et
[Fig. 3] illustre schématiquement un exemple d'algorithme mettant en œuvre un procédé de régulation de vitesse selon l'invention.

### Description détaillée de l'invention

L'invention a notamment pour but de proposer un procédé de régulation de vitesse, et un dispositif de régulation de vitesse DR associé, destinés à permettre la régulation de la vitesse d'un véhicule V à conduite au moins partiellement automatisée (ou autonome), notamment en présence d'un virage.

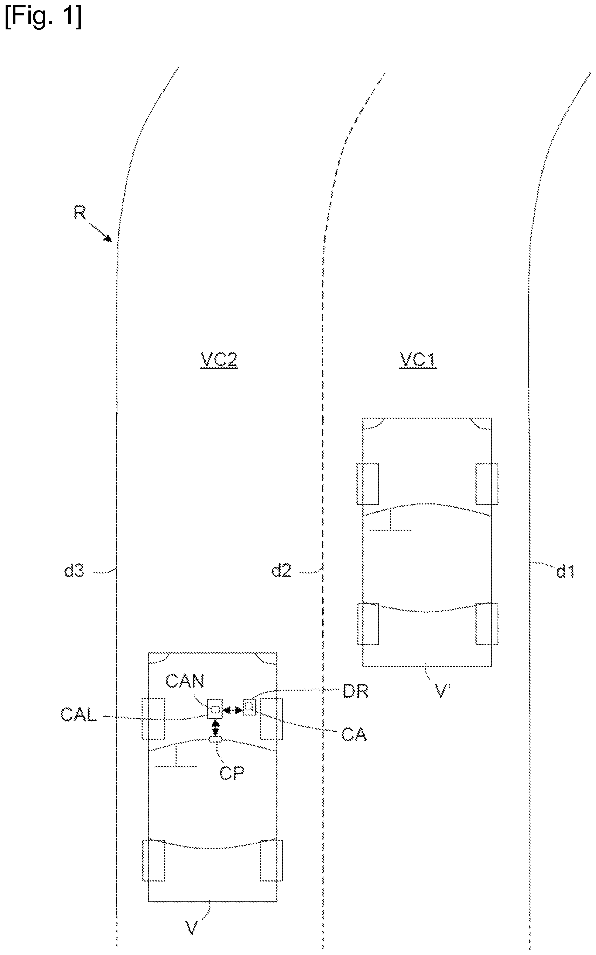

Dans ce qui suit, on considère, à titre d'exemple non limitatif, que le véhicule V est de type automobile. Il s'agit par exemple d'une voiture, comme illustré sur la figure 1. Mais l'invention n'est pas limitée à ce type de véhicule. Elle concerne en effet tout type de véhicule terrestre à conduite au moins partiellement automatisée et pouvant circuler sur des voies de circulation terrestres.

On a schématiquement et fonctionnellement représenté sur la figure 1 une route R comportant des première VC1 et seconde VC2 voies de circulation sur lesquelles circulent respectivement deux véhicules V' et V. La première voie de circulation VC1 est encadrée (ou délimitée) par deux délimitations d1 et d2, et la seconde voie de circulation VC1 est encadrée (ou délimitée) par deux délimitations d2 et d3. Par ailleurs, sur cette figure 1 le véhicule V' circule sur la première voie de circulation VC1, tandis que le véhicule V circule sur la seconde voie de circulation VC2 afin de doubler (ou dépasser) le véhicule V'.

Le véhicule V comprend au moins un dispositif de régulation de vitesse DR selon l'invention. Dans l'exemple illustré non limitativement sur la figure 1, le véhicule V comprend aussi, de façon optionnelle un capteur CP et des circuits d'analyse CAN sur lesquels on reviendra plus loin.

On notera que pour que l'invention puisse être mise en œuvre il faut que le véhicule V connaisse à chaque instant les rayons de courbure rc de la portion de la seconde voie de circulation VC2 sur laquelle il circule et de la future portion qu'il s'apprête à emprunter sur cette seconde voie de circulation VC2 sur laquelle il circule. Cette connaissance peut résulter d'une analyse de l'environnement, ou bien d'informations routières définissant chaque portion de la route R empruntée (et notamment son rayon de courbure rc (ou son inverse, à savoir la courbure)), ou encore d'une analyse des coordonnées (par exemple GPS) de la route R.

L'analyse de l'environnement peut, par exemple, résulter de la présence (de façon permanente) dans le véhicule V d'au moins un capteur CP et de circuits d'analyse CAN, comme illustré non limitativement sur la figure 1.

Ce capteur CP comprend au moins une caméra numérique installée dans une partie avant du véhicule (par exemple sur le pare-brise ou sur le rétroviseur intérieur), et chargée d'acquérir des images numériques dans l'environnement qui est au moins situé devant le véhicule V (ainsi qu'éventuellement sur une partie des deux côtés latéraux de ce dernier (V)).

On notera que le nombre de capteurs CP est ici égal à un (1), mais il peut prendre n'importe quelle valeur supérieure ou égale à un (1) (au moins un capteur sur l'avant), dès lors que cela permet d'acquérir des données dans l'environnement qui est au moins situé devant le véhicule V. Ainsi, le véhicule V pourrait aussi comprendre au moins un capteur à ultrasons, ou au moins un radar ou lidar, ou encore au moins une autre caméra installée dans une partie arrière et/ou des caméras installées sur ses deux côtés latéraux.

Les circuits d'analyse CAN sont agencés de manière à analyser au moins les images numériques, acquises par le capteur CP dans l'environnement situé au moins devant le véhicule V, afin de déterminer des données qui sont représentatives au moins de la seconde voie de circulation VC2 sur laquelle circule temporairement le véhicule V. Par exemple, ces données d'environnement définissent au moins le rayon de courbure rc (ou la courbure) des portions des deux délimitations d2 et d3 de la seconde voie de circulation VC2 que le véhicule V s'apprête à emprunter. On notera que ces données d'environnement peuvent aussi définir le cap du véhicule V, et/ou l'estimée de la dérivée du rayon de courbure rc, et/ou la largeur d'une délimitation, et/ou la distance séparant deux délimitations (ici d2 et d3), par exemple.

Dans l'exemple illustré non limitativement sur la figure 1, les circuits d'analyse CAN font partie d'un calculateur CAL embarqué dans le véhicule V. Mais cela n'est pas obligatoire. En effet, les circuits d'analyse CAN pourraient comprendre leur propre calculateur. Par conséquent, les circuits d'analyse CAN peuvent être réalisés sous la forme d'une combinaison de circuits ou composants électriques ou électroniques (ou « hardware ») et de modules logiciels (ou informatiques ou encore « software »).

Les informations routières (définissant chaque portion de la route R empruntée) peuvent provenir d'une base de données définissant une cartographie routière très précise, et embarquée dans le véhicule V ou bien accessible par voie d'ondes par ce dernier (V). Dans ce cas, on détermine précisément la position géographique de la future portion que le véhicule V s'apprête à emprunter sur la seconde voie de circulation VC2, par exemple au moyen d'un dispositif d'aide à la navigation embarqué (éventuellement temporairement) dans le véhicule V, puis on détermine dans la base de données le rayon de courbure rc (ou la courbure) qui est associé(e) à cette future portion.

En l'absence de capteur CP mais en présence de coordonnées (par exemple GPS) de la route R, les circuits d'analyse CAN sont agencés de manière à analyser ces coordonnées afin de déterminer les données d'environnement qui définissent au moins le rayon de courbure (ou la courbure) des portions des deux délimitations d2 et d3 de la seconde voie de circulation VC2 que le véhicule V s'apprête à emprunter. Ces coordonnées de la route R peuvent, par exemple, être fournies par un dispositif d'aide à la navigation embarqué (éventuellement temporairement) dans le véhicule V.

Une fois que l'on dispose du rayon de courbure (ou de la courbure), on peut déterminer la vitesse de confort permettant de passer confortablement la portion de virage à venir.

Comme évoqué plus haut, l'invention propose notamment un procédé de régulation de vitesse destiné à permettre la régulation automatisée de la vitesse du véhicule V.

Ce procédé (de régulation de vitesse) peut être au moins partiellement mis en œuvre par le dispositif de régulation (de vitesse) DR qui comprend à cet effet au moins un calculateur CA. Ce dernier (CA) peut, par exemple, comprendre au moins un processeur de signal numérique (ou DSP (« Digital Signal Processor »)), éventuellement associé à au moins une mémoire.

On notera que ce dispositif de régulation DR est éventuellement de type ADAS (« Advanced Driver Assistance System » - dispositif d'assistance (ou d'aide) à la conduite). Ainsi, il peut, par exemple, être de type dit ACC (« Adaptive Cruise Control »).

On notera également que le calculateur CA peut éventuellement assurer au sein du véhicule V au moins une autre fonction que celle qui fait l'objet de l'invention. Ainsi, il pourrait, par exemple, comprendre les éventuels circuits d'analyse CAN.

Le procédé, selon l'invention, comprend une étape 10-90 qui commence lorsque le conducteur du véhicule V a activé la fonction de régulation de vitesse et qu'une consigne de vitesse cv a été choisie.

On notera que la consigne de vitesse cv peut être choisie soit par le conducteur du véhicule V, soit par un dispositif embarqué dans ce dernier (V), par exemple en fonction d'une limitation de vitesse imposée sur la portion de la route R empruntée.

Cette régulation est contrôlée par le calculateur CA au moyen de commandes qu'il détermine pour des organes du véhicule V qui sont impliqués dans les déplacements de ce dernier (V), comme par exemple le groupe motopropulseur (ou GMP), le système de freinage, et les moyens de changement de vitesse (par exemple une boîte de vitesses automatique).

Puis, pendant cette étape 10-90, en cas de détection d'un rayon de courbure rc de la future portion (que le véhicule V s'apprête à emprunter sur la seconde voie de circulation VC2) représentatif d'un virage, on détermine une accélération transversale maximale at que peut subir le véhicule V dans ce virage en fonction de la consigne de vitesse cv (éventuellement adaptée en fonction de la vitesse d'un autre véhicule situé devant celui considéré (V)).

Il est important de noter que dans ce qui précède et ce qui suit on entend par « virage » une portion de route dont le rayon de courbure rc nécessite une diminution de vitesse pour respecter une vitesse de confort.

On comprendra que c'est le calculateur CA qui détecte si le rayon de courbure rc de la future portion est représentatif d'un virage (et donc s'il va nécessiter une diminution de vitesse), puis qui détermine l'accélération transversale maximale at.

Puis, l'étape 10-90 se poursuit par la détermination de la vitesse maximale vmax(at, rc) qu'aurait le véhicule V dans le virage s'il subissait l'accélération transversale maximale at en présence du rayon de courbure rc détecté (et donc de la vitesse de confort associée). Puis, l'étape 10-90 se poursuit par le choix d'une vitesse de décélération (ou de passage en virage) vd, que devra présenter le véhicule V à la fin d'une phase de décélération imminente, fonction de cette vitesse maximale vmax(at, rc) déterminée. Ensuite, on impose au véhicule V cette phase de décélération jusqu'à la vitesse de décélération (ou de passage en virage) vd choisie. La durée de la phase de décélération et la vitesse de décélération (ou de passage en virage) vd (qui est une vitesse maximale permise) sont choisies de manière à respecter le confort longitudinal.

En d'autres termes, on détermine la vitesse maximale vmax(at, rc) à laquelle le véhicule V peut passer le virage compte tenu du rayon de courbure rc et de la consigne de vitesse cv (éventuellement adaptée). Si cette vitesse maximale vmax(at, rc) est inférieure à la vitesse en cours du véhicule V, on peut, par exemple, déterminer à quel moment (début de la phase de décélération) le véhicule V doit commencer à ralentir pour respecter tous les points de vitesse maximale à venir dans le virage considéré. Après la phase de décélération, soit on limite encore la vitesse, soit on cesse cette limitation comme indiqué plus loin.

C'est le calculateur CA qui détermine la vitesse maximale vmax(at, rc) et la vitesse de décélération (ou de passage en virage) vd, et qui contrôle l'imposition au véhicule V de la phase de décélération.

Grâce à l'invention on peut désormais avantageusement adapter automatiquement la vitesse de décélération vd d'un véhicule V dans un virage en fonction de la consigne de vitesse cv et du rayon de courbure rc de ce virage. Il a en effet été constaté que plus un conducteur fixait la consigne de vitesse cv à une valeur élevée, plus il souhaitait qu'en virage l'écart entre sa consigne de vitesse cv et la vitesse de décélération vd soit petit (au moins de façon relative), y compris lorsque cela induisait une forte augmentation de l'accélération transversale at.

Une fois la vitesse de décélération vd atteinte par le véhicule V, on impose à ce dernier (V) une phase d'accélération jusqu'à obtention d'une vitesse égale à la consigne de vitesse cv (éventuellement adaptée en fonction de la vitesse d'un autre véhicule situé devant celui considéré (V)). On considère en effet que le virage n'impose plus de contrainte à la vitesse du véhicule V. On comprendra que c'est le calculateur CA qui contrôle l'imposition au véhicule V de la phase d'accélération. Cette phase d'accélération peut être imposée juste après la phase de décélération, ou bien après avoir laissé passer une durée prédéfinie à la fin de la phase de décélération, ou encore lorsque le rayon de courbure rc de la future portion que s'apprête à emprunter le véhicule V devient suffisamment élevé pour ne pas nécessiter une nouvelle phase de décélération.

Par exemple, dans l'étape 10-90 on (le calculateur CA) peut déterminer l'accélération transversale maximale at que peut subir le véhicule V dans le virage en fonction non seulement de la consigne de vitesse cv (éventuellement adaptée), mais également d'une réduction maximale de vitesse rm autorisée en fonction d'un contexte local en cours sur la voie de circulation VC2 qui est empruntée par son véhicule V. En effet, lorsque le contexte local l'impose, on peut décider d'utiliser temporairement une réduction maximale de vitesse rm plus petite, alors même que l'on sait que cela va induire dans le véhicule V une accélération transversale maximale at plus importante qu'à l'accoutumée (et donc possiblement moins confortable pour les passagers du véhicule V).

Tout type de contexte local peut être ici considéré dès lors qu'il concerne la circulation sur la route R. Ainsi, le contexte local peut être un dépassement en cours d'un véhicule V' par le véhicule V (comme illustré sur la figure 1), ou bien la densité du trafic (forte, faible ou moyenne). On comprendra en effet que lors d'un dépassement il est préférable que le véhicule V se retrouve placé devant le véhicule V' aussi vite que possible pour ne pas empêcher d'autres véhicules de faire de même et ne pas perturber le conducteur du véhicule V'. De même, plus la densité de trafic est forte, plus il faut respecter la vitesse en cours du flux de circulation (ici sur la seconde voie de circulation VC2), afin d'éviter des accidents ou la génération de ralentissements.

L'éventuel contexte local est de préférence détecté de façon automatique par le calculateur CA, par exemple par analyse d'images d'environnement acquises par un capteur CP et/ou d'informations routières locales reçues par le véhicule V. Mais il pourrait aussi être fourni par le conducteur via une interface homme/machine du véhicule V.

On notera que dans l'étape 10-90 on peut déterminer l'accélération transversale maximale at que peut subir le véhicule V dans le virage considéré en fonction de l'intervalle de vitesses auquel appartient la consigne de vitesse cv et qui est choisi parmi au moins deux intervalles de vitesses choisis. Cette option peut être mise en œuvre avec ou sans prise en compte d'un éventuel contexte local.

En présence des deux dernières options, dans l'étape 10-90 les intervalles de vitesses peuvent être choisis (par le calculateur CA) en fonction du contexte local en cours.

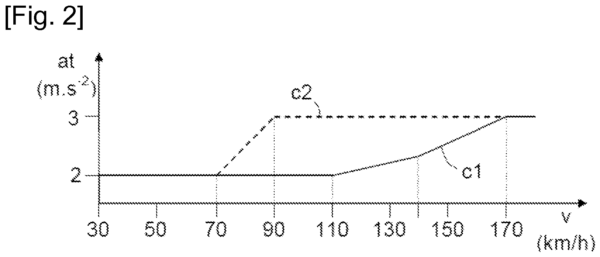

La mise en œuvre des trois dernières options est schématiquement illustrée à titre d'exemple sur la figure 2, au sein d'un diagramme. Plus précisément, dans ce diagramme sont illustrées des première c1 et seconde c2 courbes d'évolution temporelle (t) de l'accélération transversale at (en m.s⁻²) autorisée pour le véhicule V en fonction de sa vitesse v (en km/h) lorsqu'il fait l'objet d'une régulation de vitesse par son dispositif de régulation DR et en présence de trafics respectivement faible et fort. La courbe c1 illustre une situation dite de confort dans laquelle le confort transversal des passagers est privilégié, tandis que la courbe c2 illustre une situation dite dégradée dans laquelle « l'efficacité » est recherchée pour ne pas perturber le flux de circulation.

Dans cet exemple purement illustratif, la courbe c1 (de confort) montre que l'on accepte que l'accélération transversale at autorisée soit égale à 2 m.s⁻² tant que la consigne de vitesse cv demeure inférieure ou égale à 110 km/h, puis que l'accélération transversale at autorisée soit comprise entre 2,01 m.s⁻² et 2,5 m.s⁻² lorsque la consigne de vitesse cv est comprise entre 111 km/h et 140 km/h, puis que l'accélération transversale at autorisée soit comprise entre 2,51 m.s⁻² et 3 m.s⁻² lorsque la consigne de vitesse cv est comprise entre 141 km/h et 170 km/h, et enfin que l'accélération transversale at autorisée soit égale à 3 m.s⁻² tant que la consigne de vitesse cv demeure supérieure à 171 km/h. La courbe c2 (d'efficacité) montre que l'on accepte que l'accélération transversale at autorisée soit égale à 2 m.s⁻² tant que la consigne de vitesse cv demeure inférieure ou égale à 70 km/h, puis que l'accélération transversale at autorisée soit comprise entre 2,01 m.s⁻² et 3 m.s⁻² lorsque la consigne de vitesse cv est comprise entre 71 km/h et 90 km/h, puis que l'accélération transversale at autorisée soit égale à 3 m.s⁻² tant que la consigne de vitesse cv demeure supérieure à 91 km/h.

Les deux courbes d'accélération latérale C1 et C2 ne dépendent pas ici du trafic ou de la densité de ce dernier, mais simplement de l'écart de vitesse que l'on autorise pour ne pas trop diminuer la vitesse du véhicule V et ainsi ne pas être trop en décalage avec le choix conducteur. Par ailleurs, on notera que dans certains contextes on peut se retrouver entre les deux courbes C1 et C2.

Il ressort de la description de la figure 2 qui précède que les intervalles de vitesses choisis par le calculateur CA varient selon que l'on est dans le premier contexte local correspondant à la courbe de confort c1, ou dans le second contexte local correspondant à la courbe dégradée c2. De plus, on peut observer que l'accélération transversale maximale at dépend de l'un des quatre intervalles de vitesses auquel appartient la consigne de vitesse vc considérée dans le premier contexte local correspondant à la courbe de confort c1, et de l'un des trois intervalles de vitesses auquel appartient la consigne de vitesse cv considérée dans le second contexte local correspondant à la courbe dégradée c2. Le nombre d'intervalles de vitesses utilisés pour chaque contexte local considéré peut varier en fonction de la configuration du calculateur CA ou des besoins. Chaque intervalle de vitesses peut, par exemple, être associé à un profil de conducteur (et plus précisément à l'écart que le conducteur a l'habitude de choisir entre la consigne de vitesse cv et la vitesse limite autorisée sur la portion de la route R qu'il emprunte). En variante, les vitesses de consigne compte-tenu des virages à passer peuvent déterminer les profils des conducteurs.

On notera également que dans l'étape 10-90 on (le calculateur CA) peut choisir la vitesse de décélération vd en fonction de la vitesse maximale vmax(at, rc) déterminée et de la réduction maximale de vitesse rm qui est autorisée en fonction du contexte local en cours. Cela nécessite de préférence que le contexte local corresponde au rayon de courbure rc et à la consigne de vitesse cv et non à la densité du trafic.

En d'autres termes, cette option permet d'empêcher que l'écart de vitesse entre la consigne de vitesse cv et la vitesse de décélération vd soit supérieur à une valeur égale à la réduction maximale de vitesse rm.

On notera également que dans l'étape 10-90 la réduction maximale de vitesse rm autorisée peut être fonction de l'écart de vitesse ev entre la vitesse limite autorisée sur la voie de circulation VC2 empruntée par le véhicule V et la consigne de vitesse cv. Par exemple, en présence de cette dernière option, dans l'étape 10-90 plus l'écart de vitesse ev est grand, plus la réduction maximale de vitesse rm autorisée pourrait être grande.

Mais dans une variante de la dernière option, la réduction maximale de vitesse rm autorisée peut être prédéfinie. Dans ce cas, elle peut, par exemple, dépendre de l'intervalle de vitesses auquel appartient la consigne de vitesse cv considérée (et éventuellement adaptée). On pourrait aussi prendre en considération deux écarts maximaux autorisé : le premier permettant de limiter l'écart de vitesse en respectant la courbe de vitesse de confort puis d'autoriser une dégradation du confort pour ne pas trop diminuer la vitesse du véhicule V, le second permettant de figer une accélération latérale (ou transversale) maximale dégradée et d'autoriser une diminution de vitesse maximale (par exemple de 60 km/h) par rapport à la consigne de vitesse cv. Dans ce cas, on considère que le conducteur doit gérer la situation si sa consigne de vitesse diffère beaucoup trop par rapport à ce que permet la configuration de la route.

On notera également que la limitation de vitesse en vigueur sur la portion de route empruntée peut être ici prise en compte dans les calculs.

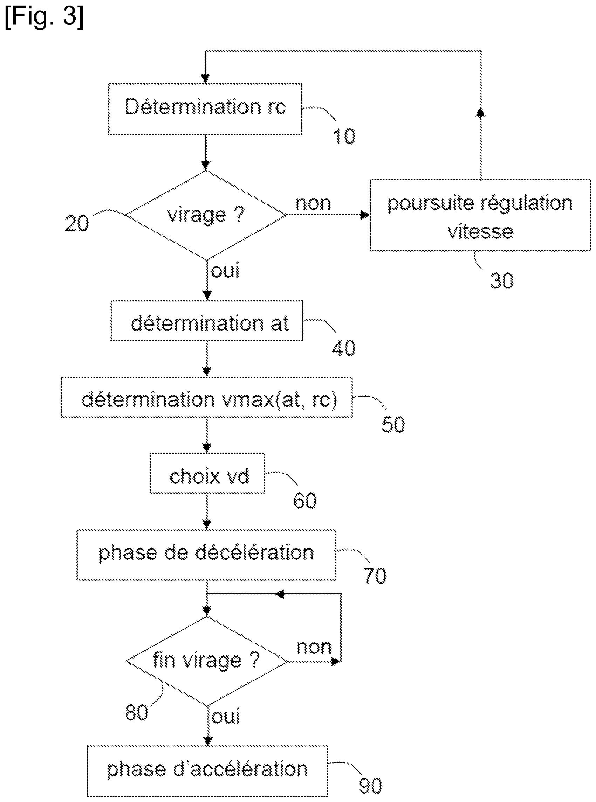

On a schématiquement illustré sur la figure 3 un exemple d'algorithme mettant en œuvre l'étape du procédé de régulation de vitesse décrit ci-avant.

Dans une première sous-étape 10 on (le calculateur CA) détermine, pendant qu'il régule la vitesse du véhicule V à la consigne de vitesse cv (éventuellement adaptée), le rayon de courbure rc de la future portion (que le véhicule V s'apprête à emprunter sur la seconde voie de circulation VC2).

Puis, dans une deuxième sous-étape 20 on (le calculateur CA) détermine si ce rayon de courbure rc est représentatif d'un virage. Dans la négative (« non »), on (le calculateur CA) poursuit normalement la régulation de vitesse à la consigne de vitesse cv dans une troisième sous-étape 30 et effectue de nouveau la première sous-étape 10.

En revanche, dans l'affirmative (« oui »), on (le calculateur CA) détermine dans une quatrième sous-étape 40 une accélération transversale maximale at que peut subir le véhicule V dans le virage en fonction de la consigne de vitesse cv (éventuellement adaptée).

Puis, dans une cinquième sous-étape 50 on (le calculateur CA) détermine la vitesse maximale vmax(at, rc) qu'aurait le véhicule V dans le virage s'il subissait l'accélération transversale maximale at déterminée dans la quatrième sous-étape 40, en présence du rayon de courbure rc détecté dans la première sous-étape 10.

Puis, dans une sixième sous-étape 60 on (le calculateur CA) choisit une vitesse de décélération vd, que devra présenter le véhicule V à la fin de la phase de décélération à venir, fonction de la vitesse maximale vmax(at, rc) déterminée dans la cinquième sous-étape 50.

Ensuite, on (le calculateur CA) impose au véhicule V, dans une septième sous-étape 70, une phase de décélération jusqu'à la vitesse de décélération vd choisie dans la sixième sous-étape 60.

Puis, dans une huitième sous-étape 80, on (le calculateur CA) peut, par exemple, déterminer si le véhicule V est sorti du virage. Dans la négative (« non »), on (le calculateur CA) peut effectuer de nouveau la huitième sous-étape 80.

En revanche, dans l'affirmative (« oui »), on (le calculateur CA) peut imposer au véhicule V, dans une neuvième sous-étape 90, une phase d'accélération jusqu'à obtention d'une vitesse égale à la consigne de vitesse cv (éventuellement adaptée). Puis, on (le calculateur CA) va reprendre la régulation de vitesse normale (hors virage), à la consigne de vitesse cv (éventuellement adaptée), et donc on (le calculateur CA) va effectuer de nouveau la première sous-étape 10.

On notera que l'invention propose aussi un produit programme d'ordinateur comprenant un jeu d'instructions qui, lorsqu'il est exécuté par des moyens de traitement de type circuits électroniques (ou hardware), comme par exemple le calculateur CA, est propre à mettre en œuvre le procédé de régulation de vitesse décrit ci-avant pour réguler la vitesse du véhicule V.

On notera également que sur la figure 1 le dispositif de régulation DR est très schématiquement illustré avec seulement son calculateur CA. Ce dispositif de régulation DR peut prendre la forme d'un boitier comprenant des circuits intégrés (ou imprimés), ou bien de plusieurs circuits intégrés (ou imprimés) reliés par des connections filaires ou non filaires. On entend par circuit intégré (ou imprimé) tout type de dispositif apte à effectuer au moins une opération électrique ou électronique. Comme évoqué plus haut, ce dispositif de régulation DR peut comprendre au moins un processeur, par exemple de signal numérique (ou DSP (Digital Signal Processor)), une mémoire vive pour stocker des instructions pour la mise en œuvre par ce processeur du procédé de régulation de vitesse tel que décrit ci-avant, et une mémoire de masse notamment pour le stockage des données d'environnement obtenues, et des éventuelles données intermédiaires intervenant dans tous les calculs. Le calculateur CA reçoit au moins les données d'environnement pour les utiliser dans des calculs, éventuellement après les avoir mises en forme et/ou démodulées et/ou amplifiées, de façon connue en soi. Le dispositif de régulation DR peut également comporter une interface d'entrée pour la réception d'au moins les données d'environnement, et une interface de sortie pour la transmission des résultats de ses calculs, et notamment les commandes de régulation de vitesse.

Une ou plusieurs sous-étapes de l'étape du procédé de régulation de vitesse peuvent être effectuées par des composants différents. Ainsi, le procédé de régulation de vitesse peut-être mis en œuvre par une pluralité de processeurs, mémoire vive, mémoire de masse, interface d'entrée, interface de sortie et/ou processeur de signal numérique. Dans ces situations, le dispositif de régulation DR peut-être décentralisé, au sein d'un réseau local (plusieurs processeurs reliés entre eux par exemple) ou d'un réseau étendu.

## Revendications

1. Procédé de régulation de la vitesse d'un véhicule (V) à conduite au moins partiellement automatisée et connaissant le rayon de courbure d'une future portion qu'il s'apprête à emprunter sur une voie de circulation (VC2) sur laquelle il circule, ledit procédé comprenant une étape (10-90) dans laquelle on régule la vitesse dudit véhicule (V) en fonction d'une consigne de vitesse et, en cas de détection d'un rayon de courbure de ladite future portion représentatif d'un virage, on impose audit véhicule (V) une phase de décélération jusqu'à une vitesse de décélération choisie, dans ladite étape (10-90) on détermine une accélération transversale maximale que peut subir ledit véhicule (V) dans ledit virage en fonction de ladite consigne de vitesse, puis une vitesse maximale qu'aurait ledit véhicule (V) dans ledit virage s'il subissait ladite accélération transversale maximale en présence dudit rayon de courbure détecté, puis on choisit une vitesse de décélération en fonction de cette vitesse maximale déterminée.

2. Procédé selon la revendication 1, **caractérisé en ce que** dans ladite étape (10-90) on détermine ladite accélération transversale maximale que peut subir ledit véhicule (V) dans ledit virage en fonction de ladite consigne de vitesse et d'une réduction maximale de vitesse autorisée en fonction d'un contexte local en cours sur ladite voie de circulation (VC2) empruntée par ledit véhicule (V).

3. Procédé selon la revendication 1 ou 2, **caractérisé en ce que** dans ladite étape (10-90) on détermine ladite accélération transversale maximale que peut subir ledit véhicule (V) dans ledit virage en fonction d'un intervalle de vitesses auquel appartient ladite consigne de vitesse et qui est choisi parmi au moins deux intervalles de vitesses choisis.

4. Procédé selon la combinaison des revendications 2 et 3, **caractérisé en ce que** dans ladite étape (10-90) lesdits intervalles de vitesses sont choisis en fonction dudit contexte local en cours.

5. Procédé selon l'une des revendications 2 à 4, **caractérisé en ce que** dans ladite étape (10-90) on choisit ladite vitesse de décélération en fonction de ladite vitesse maximale déterminée et de ladite réduction maximale de vitesse autorisée.

6. Procédé selon l'une des revendications 2 à 5, **caractérisé en ce que** dans ladite étape (10-90) ladite réduction maximale de vitesse autorisée est fonction d'un écart de vitesse entre une vitesse limite autorisée sur ladite voie de circulation (VC2) empruntée par ledit véhicule (V) et ladite consigne de vitesse.

7. Procédé selon la revendication 6, **caractérisé en ce que** dans ladite étape (10-90) plus ledit écart de vitesse est grand, plus ladite réduction maximale de vitesse autorisée est grande.

8. Produit programme d'ordinateur comprenant un jeu d'instructions qui, lorsqu'il est exécuté par des moyens de traitement, est propre à mettre en œuvre le procédé de régulation de vitesse selon l'une des revendications précédentes pour réguler la vitesse d'un véhicule (V) à conduite au moins partiellement automatisée et connaissant le rayon de courbure d'une future portion qu'il s'apprête à emprunter sur une voie de circulation (VC2) sur laquelle il circule.

9. Dispositif de régulation de vitesse (DR) pour un véhicule (V) à conduite au moins partiellement automatisée et connaissant le rayon de courbure d'une future portion qu'il s'apprête à emprunter sur une voie de circulation (VC2) sur laquelle il circule, ledit dispositif (DR) comprenant au moins un calculateur (CA) contrôlant la régulation de la vitesse dudit véhicule (V) en fonction d'une consigne de vitesse, et, en cas de détection d'un rayon de courbure de ladite future portion représentatif d'un virage, contrôlant l'imposition audit véhicule (V) d'une phase de décélération jusqu'à une vitesse de décélération choisie, ledit calculateur (CA) i) déterminant une accélération transversale maximale que peut subir ledit véhicule (V) dans ledit virage en fonction de ladite consigne de vitesse, puis ii) déterminant une vitesse maximale qu'aurait ledit véhicule (V) dans ledit virage s'il subissait ladite accélération transversale maximale en présence dudit rayon de courbure détecté, puis iii) choisissant une vitesse de décélération en fonction de cette vitesse maximale déterminée.

10. Véhicule (V) à conduite au moins partiellement automatisée et connaissant le rayon de courbure d'une future portion qu'il s'apprête à emprunter sur une voie de circulation (VC2) sur laquelle il circule, **caractérisé en ce qu'**il comprend un dispositif de régulation de vitesse (DR) selon la revendication 9.

## Patentansprüche

1. Verfahren zur Regelung der Geschwindigkeit eines Fahrzeugs (V) mit zumindest teilweise automatisiertem Fahren und Kenntnis des Krümmungsradius eines künftigen Abschnitts, den es auf einer Fahrspur (VC2), auf der es fährt, zu befahren beabsichtigt, wobei das Verfahren einen Schritt (10-90) umfasst, in dem man die Geschwindigkeit des Fahrzeugs (V) in Abhängigkeit von einem Geschwindigkeitssollwert regelt und im Fall der Erfassung eines Krümmungsradius des künftigen Abschnitts, der für eine Kurve repräsentativ ist, dem Fahrzeug (V) eine Verzögerungsphase bis zu einer gewählten Verzögerungsgeschwindigkeit auferlegt wird, in dem Schritt (10-90) eine maximale Querbeschleunigung, die das Fahrzeug (V) in der Kurve erfahren kann, in Abhängigkeit von dem Geschwindigkeits-Sollwert bestimmt wird, dann eine maximale Geschwindigkeit bestimmt wird, die das Fahrzeug (V) in der Kurve hätte, wenn es die maximale Querbeschleunigung bei Vorhandensein des erfassten Krümmungsradius erfahren würde, und dann eine Verzögerungsgeschwindigkeit in Abhängigkeit von dieser bestimmten maximalen Geschwindigkeit gewählt wird.

2. . Verfahren nach Anspruch 1, **dadurch gekennzeichnet, dass** in dem Schritt (10-90) die maximale Querbeschleunigung, die das Fahrzeug (V) in der Kurve erfahren kann, in Abhängigkeit von dem Geschwindigkeitssollwert und einer maximal zulässigen Geschwindigkeitsreduzierung in Abhängigkeit von einem aktuellen lokalen Kontext auf der Fahrspur (VC2), die von dem Fahrzeug (V) befahren wird, bestimmt wird.

3. . Verfahren nach Anspruch 1 oder 2, **dadurch gekennzeichnet, dass** in dem Schritt (10-90) die maximale Querbeschleunigung, die das Fahrzeug (V) in der Kurve erfahren kann, als Funktion eines Geschwindigkeitsintervalls bestimmt wird, zu dem der Geschwindigkeits-Sollwert gehört und das aus mindestens zwei ausgewählten Geschwindigkeitsintervallen ausgewählt wird.

4. . Verfahren nach der Kombination der Ansprüche 2 und 3, **dadurch gekennzeichnet, dass** in dem Schritt (10-90) die Geschwindigkeitsintervalle in Abhängigkeit von dem aktuellen lokalen Kontext ausgewählt werden.

5. . Verfahren nach einem der Ansprüche 2 bis 4, **dadurch gekennzeichnet, dass** in dem Schritt (10-90) die Verzögerungsgeschwindigkeit in Abhängigkeit von der ermittelten Höchstgeschwindigkeit und der maximal zulässigen Geschwindigkeitsreduzierung gewählt wird.

6. . Verfahren nach einem der Ansprüche 2 bis 5, **dadurch gekennzeichnet, dass** in dem Schritt (10-90) die maximal zulässige Geschwindigkeitsreduzierung von einer Geschwindigkeitsabweichung zwischen einer zulässigen Grenzgeschwindigkeit auf der von dem Fahrzeug (V) befahrenen Fahrbahn (VC2) und dem Geschwindigkeitssollwert abhängt.

7. . Verfahren nach Anspruch 6, **dadurch gekennzeichnet, dass** in dem Schritt (10-90) die maximal zulässige Geschwindigkeitsreduzierung umso größer ist, je größer die Geschwindigkeitsabweichung ist.

8. . Computerprogrammprodukt mit einem Befehlssatz, der, wenn er von Verarbeitungsmitteln ausgeführt wird, geeignet ist, das Geschwindigkeitsregelungsverfahren nach einem der vorhergehenden Ansprüche zu implementieren, um die Geschwindigkeit eines Fahrzeugs (V) zu regeln, das zumindest teilweise automatisiert fährt und den Krümmungsradius eines zukünftigen Abschnitts kennt, den es auf einer Fahrspur (VC2), auf der es fährt, zu befahren beabsichtigt.

9. . Vorrichtung zur Geschwindigkeitsregelung (DR) für ein Fahrzeug (V), das zumindest teilweise automatisiert fährt und den Krümmungsradius eines künftigen Abschnitts kennt, den es auf einer Fahrbahn (VC2), auf der es fährt, zu befahren beabsichtigt, wobei die Vorrichtung (DR) mindestens einen Rechner (CA) umfasst, der die Regelung der Geschwindigkeit des Fahrzeugs (V) in Abhängigkeit von einem Geschwindigkeitssollwert steuert und im Fall der Erfassung eines Krümmungsradius des künftigen Abschnitts, der für eine Kurve repräsentativ ist, die Auferlegung der Geschwindigkeit des Fahrzeugs (V) steuert, das Auferlegen einer Verzögerungsphase bis zu einer gewählten Verzögerungsgeschwindigkeit auf das Fahrzeug (V) steuert, wobei der Rechner (CA) i) eine maximale Querbeschleunigung bestimmt, die das Fahrzeug (V) in der Kurve in Abhängigkeit von dem Geschwindigkeitssollwert erfahren kann, dann ii) eine Höchstgeschwindigkeit bestimmt, die das Fahrzeug (V) in der Kurve hätte, wenn es die maximale Querbeschleunigung bei Vorhandensein des erfassten Krümmungsradius erfahren würde, dann iii) eine Verzögerungsgeschwindigkeit in Abhängigkeit von dieser bestimmten Höchstgeschwindigkeit wählt.

10. . Fahrzeug (V), das zumindest teilweise automatisiert fährt und den Krümmungsradius eines zukünftigen Abschnitts kennt, den es auf einer Fahrspur (VC2), auf der es fährt, zu befahren beabsichtigt, **dadurch gekennzeichnet, dass** es eine Vorrichtung zur Geschwindigkeitsregelung (DR) nach Anspruch 9 umfasst.

## Claims

1. Method for regulating the speed of a vehicle (V) with at least partially automated driving and knowing the radius of curvature of a future portion that it is about to take on a traffic lane (VC2) on which it is travelling, said method comprising a step (10-90) in which the speed of said vehicle (V) is regulated as a function of a speed set point and, in the event of detection of a radius of curvature of said future portion representative of a bend a deceleration phase is imposed on said vehicle (V) up to a chosen deceleration speed, in said step (10-90) a maximum transverse acceleration that said vehicle (V) can undergo in said bend is determined as a function of said speed set point, then a maximum speed that said vehicle (V) would have in said bend if it underwent said maximum transverse acceleration in the presence of said detected radius of curvature, and then a deceleration speed is chosen as a function of this determined maximum speed.

2. Method according to claim 1, **characterized in that** in said step (10-90) said maximum transverse acceleration that said vehicle (V) can undergo in said bend is determined as a function of said speed set point and of a maximum speed reduction authorized as a function of a current local context on said traffic lane (VC2) used by said vehicle (V).

3. Method according to claim 1 or 2, **characterized in that** in said step (10-90) said maximum transverse acceleration that said vehicle (V) can undergo in said turn is determined as a function of a speed interval to which said speed set point belongs and which is selected from at least two selected speed intervals.

4. A method according to the combination of claims 2 and 3, **characterized in that** in said step (10-90) said speed intervals are selected as a function of said current local context.

5. A method according to any of claims 2 to 4, **characterized in that** in said step (10-90) said deceleration speed is selected as a function of said determined maximum speed and said maximum allowed speed reduction.

6. Method according to one of claims 2 to 5, **characterized in that** in said step (10-90) said maximum authorized speed reduction is a function of a speed difference between an authorized speed limit on said traffic lane (VC2) used by said vehicle (V) and said speed set point.

7. A method according to claim 6, **characterized in that** in said step (10-90) the greater said speed deviation, the greater said maximum allowable speed reduction.

8. A computer program product comprising a set of instructions which, when executed by processing means, is suitable for implementing the speed control method according to any of the preceding claims for controlling the speed of a vehicle (V) with at least partially automated driving and knowing the radius of curvature of a future portion it is about to take on a traffic lane (VC2) on which it is driving.

9. Speed regulation device (DR) for a vehicle (V) with at least partially automated driving and knowing the radius of curvature of a future portion that it is about to take on a traffic lane (VC2) on which it is travelling, said device (DR) comprising at least one computer (CA) controlling the regulation of the speed of said vehicle (V) as a function of a speed set point, and, in the event of detection of a radius of curvature of said future portion representative of a bend controlling the imposition on said vehicle (V) of a deceleration phase up to a selected deceleration speed, said computer (CA) i) determining a maximum transverse acceleration that said vehicle (V) can undergo in said bend as a function of said speed set point, then ii) determining a maximum speed that said vehicle (V) would have in said bend if it underwent said maximum transverse acceleration in the presence of said detected radius of curvature, and then iii) selecting a deceleration speed as a function of this determined maximum speed.

10. Vehicle (V) with at least partially automated driving and knowing the radius of curvature of a future portion that it is about to take on a traffic lane (VC2) on which it is travelling, **characterized in that** it comprises a speed control device (DR) according to claim 9.
